# EUROPÄISCHE PATENTSCHRIFT

(11) **EP 3 478 533 B1**
(45) Veröffentlichungstag und Bekanntmachung des Hinweises auf die Patenterteilung: **04.11.2020**
(21) Anmeldenummer: 17734076.7
(22) Anmeldetag: 29.06.2017
(51) Int. Cl.: B60N 2/08

(54) **LÄNGSEINSTELLER SOWIE FAHRZEUGSITZ**
LONGITUDINAL ADJUSTER AND VEHICLE SEAT
DISPOSITIF DE RÉGLAGE EN LONGUEUR ET SIÈGE DE VÉHICULE

(30) Priorität: 04.07.2016 DE 102016212168
(43) Veröffentlichungstag der Anmeldung: 08.05.2019
(73) Patentinhaber: Adient Luxembourg Holding S.à r.l., 1855 Luxembourg (LU)
(72) Erfinder: FLICK, Joachim, 42499 Hueckeswagen (DE); SPRENGER, Erik, 42959 Wermelskirchen (DE)
(74) Vertreter: Liedhegener, Ralf
(86) Internationale Anmeldenummer: PCT/EP2017/066126
(87) Internationale Veröffentlichungsnummer: WO 2018/007233

(56) Entgegenhaltungen:
- DE-A1- 19 911 281
- KR-B1- 101 330 025
- US-A- 6 109 584
- US-B1- 6 637 712

## Beschreibung

Die Erfindung betrifft einen Längseinsteller mit den Merkmalen des Oberbegriffs des Anspruchs 1 sowie einen Fahrzeugsitz.

### Stand der Technik

Aus der DE 10 2014 219 868 A1 ist ein Längseinsteller eines Fahrzeugsitzes bekannt, aufweisend mindestens eine fahrzeugfeste Sitzschiene und eine sitzfeste Sitzschiene, welche einander unter Bildung eines Schienenpaares wechselseitig umgreifen und relativ zueinander in Längsrichtung beweglich sind, wobei das Schienenpaar mittels einer Schienenverriegelung verriegelbar ist, ferner aufweisend mindestens eine Betätigungsanordnung zur Betätigung der Schienenverriegelung. Die Schienenverriegelung weist eine Rastplatte mit einem Führungspin auf, welcher in einer Durchtrittsöffnung der sitzfesten Sitzschiene durchgängig geführt ist.

Aus der DE 10 2011 100 762 A1 ist ein Längseinsteller für einen Fahrzeugsitz bekannt, aufweisend ein Sitzschienenpaar, mit einer strukturfesten ersten Sitzschiene, einer in dieser ersten Sitzschiene in Sitzlängsrichtung geführten, mit dem Fahrzeugsitz verbundenen zweiten Sitzschiene, eine lösbare Verriegelungsvorrichtung mit mindestens zwei in einer Verriegelungsrichtung beweglichen Rastplatten zum lösbaren Verriegeln der Position der ersten Sitzschiene gegenüber der zweiten Sitzschiene, wobei ein innerhalb der zweiten Sitzschiene angeordnetes Betätigungselement vorgesehen ist, welches mit den Rastplatten zum Entriegeln des Längseinstellers zusammenwirkt, wobei das Betätigungselement über einen in z-Richtung beweglich geführten Betätigungsstift, welcher durch die zweite Sitzschiene hindurchgeführt ist, verschiebbar ist.

Aus der EP 2 630 003 B1 ist ein Längseinsteller für einen Fahrzeugsitz bekannt, mit einer ersten Sitzschiene und einer zweiten Sitzschiene, die einander unter Bildung eines Schienenprofils wechselseitig umgreifen und relativ zueinander in Längsrichtung beweglich sind, und einer die Sitzschienen miteinander verriegelnden Schienenverriegelung, welche zumindest grossteils innerhalb des durch die Sitzschienen gebildeten Schienenprofils angeordnet ist, wobei eine Betätigungsanordnung zur Betätigung einer Entriegelungseinheit vorgesehen ist, wobei die Entriegelungseinheit zumindest grossteils innerhalb des durch die Sitzschienen gebildeten Schienenprofils angeordnet ist.

Aus der US 5 961 193 A ist eine Teleskop-Gleitanordnung zum gleitbaren Tragen einer Last bekannt. Die Teleskop-Gleitanordnung umfasst miteinander verbundene, lastaufnehmende, Zwischengleitelemente und stationäre Gleitelemente, die relativ zueinander beweglich sind.

Aus der KR 101 330 025 B1 ist eine Sitzschienenverriegelungsvorrichtung bekannt, welche einen erleichterten Zusammenbau zwischen einer Rückstellfeder und peripheren Komponenten ermöglicht, indem eine einfache Verriegelungsstruktur für beide Eingriffsenden der Rückstellfeder verwendet wird. Zu diesem Zweck weist die Sitzschienenverriegelungsvorrichtung ein Verriegelungselement auf, das vertikal zu einer beweglichen Schiene bewegbar ist, um entlang einer an einer Fahrzeugkarosserie festen Schiene bewegt zu werden. Ein Führungsstift, dessen eines Ende mit dem Verriegelungselement verbunden ist und dessen anderes Ende durch ein kreisrundes Durchgangsloch der beweglichen Schiene verläuft, ist in dem Durchgangsloch der beweglichen Schiene mittels einer im Wesentlichen zylindrischen Hülse geführt. Die Hülse ist unter Bildung einer Schnappverbindung mittels zweier Vorsprünge in dem Durchgangsloch fixiert.

### Aufgabe

Der Erfindung liegt die Aufgabe zu Grunde, einen Längseinsteller der eingangs genannten Art zu verbessern, insbesondere ein unbeabsichtigtes Entriegeln einer Rastplatte einer Verriegelungseinrichtung zu verhindern und/oder eine Reduktion von Kontaktgeräuschen zu ermöglichen sowie einen entsprechenden Fahrzeugsitz bereitzustellen.

### Lösung

Diese Aufgabe wird erfindungsgemäß gelöst durch einen Längseinsteller für einen Fahrzeugsitz, aufweisend mindestens ein Schienenpaar, welches aus einer unteren Sitzschiene, insbesondere einer fahrzeugfesten Sitzschiene, und einer oberen Sitzschiene, insbesondere einer sitzfesten Sitzschiene, gebildet ist, wobei die Sitzschienen des Sitzschienenpaares einander wechselseitig umgreifen und in Längsrichtung relativ zueinander beweglich sind und mittels einer Verriegelungseinrichtung miteinander verriegelbar sind, wobei die Verriegelungseinrichtung mindestens eine in Vertikalrichtung bewegliche Rastplatte aufweist, wobei die Rastplatte einen in Vertikalrichtung abstehenden Führungsstift aufweist, wobei die obere Sitzschiene eine mit dem Führungsstift fluchtende Öffnung aufweist, wobei in der Öffnung eine sich in den zwischen den Sitzschienen gebildeten Hohlraum erstreckende Führungshülse aufgenommen ist und der Führungsstift mittels der Führungshülse geführt ist, wobei die Führungshülse und die obere Sitzschiene mittels eines Bajonettverschlusses verbindbar sind.

Dadurch, dass in der Öffnung der oberen Sitzschiene eine sich in den zwischen den Sitzschienen gebildeten Hohlraum erstreckende Führungshülse aufgenommen ist und der Führungsstift mittels der Führungshülse geführt ist, kann ein unmittelbarer Kontakt zwischen dem üblicherweise metallischen Führungsstift und der metallischen Oberschiene vermieden werden.

Dadurch, dass die Führungshülse und die obere Sitzschiene mittels eines Bajonettverschlusses verbindbar sind, kann die Führungshülse während der Montage des Längseinstellers auf einfache Art vormontiert werden. Unter einem "Bajonettverschluss" im Sinne der vorliegenden Erfindung ist allgemein einer Verbindung bezeichnet, welche durch eine Steck-Dreh-Bewegung erfolgt. Demnach wird die Führungshülse zur Befestigung in der Oberschiene zunächst entlang einer Einsteckrichtung eingesteckt und anschließend durch eine Dreh-Bewegung in der Oberschiene vor einem erneuten Entfernen entgegen der Einsteckrichtung aus der Oberschiene gesichert. Dies kann beispielsweise dadurch erfolgen, dass ein in die Oberschiene eingeführter Abschnitt des Bajonettverschlusses nach der Dreh-Bewegung die Oberschiene abschnittsweise hintergreift.

Vorteilhafte Ausgestaltungen, welche einzeln oder in Kombination miteinander eingesetzt werden können, sind Gegenstand der Unteransprüche.

Es kann vorgesehen sein, dass die Führungshülse in Vertikalrichtung nach oben geschlossen ausgestaltet ist. Hierdurch kann eine unbeabsichtigte Betätigung des Führungsstiftes mittels einer von oben auf den Führungsstift wirkenden Kraft verhindert werden. Darüber hinaus wird ein Eindringen von Schmutz und Staub verhindert, so dass ein Festsetzen des Führungsstiftes ebenfalls vermieden ist.

Des Weiteren kann die Führungshülse mittels eines Kopfabschnitts im Bereich der Öffnung von oben auf einer Oberfläche der oberen Sitzschiene aufliegen und sich hierdurch an einem Randbereich der Öffnung halten. Hierdurch wird eine von oben auf die Führungshülse wirkende Kraft unmittelbar in die obere Sitzschiene eingeleitet und eine Übertragung der Kraft auf den Führungsstift vermieden. Durch den Kopfabschnitt kann die Führungshülse in Vertikalrichtung gestuft ausgebildet sein.

Die Führungshülse kann eine nach oben abgerundete Außenfläche aufweisen. Insbesondere können durch die Vermeidung von scharfen Kanten mögliche Verletzungen von Personen während der Montage oder einem späteren Gebrauch des Längseinstellers verhindert werden.

Zur leichteren Aufnahme des Führungsstiftes kann die Führungshülse ferner in einem unteren Bereich eine konische Öffnung, insbesondere mit einem nach unten geöffneten Winkel, aufweisen. Aufgrund der konischen Öffnung der Führungshülse wird dem Führungsstift ein geringes Spiel ermöglicht, welches durch ein ungleichmäßiges Eingreifen der Rastplatte in eine Verzahnung der unteren Sitzschiene auftreten kann, und somit eine verlässliche Funktion der Verriegelungseinrichtung sichergestellt.

Zusätzlich zum Bajonettverschluss kann die Führungshülse eine Verdrehsicherung aufweisen, welche die montierte Führungshülse in der Öffnung fixiert. Die Führungshülse kann einen Anschlag aufweisen. Eine Kontur der Öffnung kann eine Anschlagskante aufweisen. Die Anschlagskante kann in einer seitlichen Erweiterung der Öffnung angeordnet sein, insbesondere einer Erweiterung, welche einen bereichsweise runden Öffnungsquerschnitt nach außen erweitert. Bevorzugt ist die Führungshülse derart ausgestaltet, dass die Führungshülse nach der Montage der Rastplatte mit dem Führungsstift von oben in die Öffnung der oberen Sitzschiene einsetzbar und durch eine Verdrehung um eine Vertikalachse verlustsicher festsetzbar ist.

Die Verdrehsicherung kann in Form eines federelastisch abstehenden Clips ausgebildet sein. Alternativ kann die Verdrehsicherung in Form von Sicherungsstiften ausgebildet sein, welche in Vertikalrichtung beweglich in der Führungshülse angeordnet sind. Wenn die in die Öffnung eingesetzte Führungshülse soweit verdreht ist, dass der Anschlag und die Anschlagskante in Anlage sind, kann durch ein Verschieben der Sicherungsstifte, insbesondere durch ein Eindrücken der Sicherungsstifte in die Führungshülse, die Führungshülse vor einem Verdrehen gesichert werden. Hierbei treten die Sicherungsstifte mit ihrem unteren Ende in die Kontur der Öffnung ein und sichern den Kontakt des Anschlags zur Anschlagskante. Darüber hinaus kann ein Innendurchmesser der Führungshülse geringfügig größer sein, als ein Außendurchmesser des Führungsstiftes. Dies ermöglicht eine höhere Beweglichkeit des Führungsstiftes parallel zur Vertikalrichtung.

Alternativ oder zusätzlich kann die Führungshülse auf ihrer Innenseite, insbesondere auf der Innenseite einer Führungsöffnung, wenigstens drei Führungsflächen aufweisen. Hierdurch lässt sich die Kontaktfläche zwischen der Innenseite der Führungsöffnung der Führungshülse und dem Führungsstift reduzieren, so dass eine Reibung zwischen der Führungshülse und dem Führungsstift ebenfalls vermindert ist. Ferner entsteht eine definierte Kontaktfläche zwischen der Innenseite der Führungsöffnung der Führungshülse und dem Führungsstift.

Die Führungshülse kann aus einem Kunststoffmaterial gefertigt sein, insbesondere mittels eines Kunststoffspritzgussverfahrens gefertigt sein. Aufgrund einer Fertigung der Führungshülse aus Kunststoff können störende Kontaktgeräusche, durch ein Anschlagen oder Reiben des metallischen Führungsstiftes an der metallischen Oberschiene, vermieden werden.

Die Aufgabe wird ferner gelöst durch einen Fahrzeugsitz mit einem Längseinsteller gemäß vorstehender Beschreibung. Der erfindungsgemäße Fahrzeugsitz weist folglich die gleichen Vorteile auf, wie die zuvor beschriebenen Ausgestaltungen des Längseinstellers.

### Figuren und Ausführungsformen der Erfindung

Bevor nachfolgend Ausgestaltungen der Erfindung eingehender an Hand von Zeichnungen beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Darstellung eines Fahrzeugsitzes mit einem erfindungsgemäßen Längseinsteller,
- Fig. 2:: eine schematische Darstellung eines Schienenpaares des erfindungsgemäßen Längseinstellers gemäß eines ersten Ausführungsbeispiels,
- Fig. 3:: einen ausschnittsweisen Längsschnitt durch eine Verriegelungseinrichtung des Schienenpaares von Fig. 2 in einem verriegelten Zustand,
- Fig. 4:: einen Querschnitt durch die Verriegelungseinrichtung von Fig. 3 in einem verriegelten Zustand,
- Fig. 5:: einen ausschnittsweisen Längsschnitt durch die Verriegelungseinrichtung des Schienenpaares von Fig. 2 in einem entriegelten Zustand
- Fig. 6:: einen Querschnitt durch die Verriegelungseinrichtung von Fig.5 in einem entriegelten Zustand,
- Fig. 7:: eine ausschnittsweise Ansicht einer oberen Sitzschiene des Längseinstellers gemäß des ersten Ausführungsbeispiels,
- Fig. 8:: eine perspektivische Darstellung einer Führungshülse gemäß des ersten Ausführungsbeispiels,
- Fig. 9:: einen ausschnittsweisen Längsschnitt durch eine Verriegelungseinrichtung eines Schienenpaares gemäß eines zweiten Ausführungsbeispiels in einem verriegelten Zustand,
- Fig. 10:: einen ausschnittsweisen Längsschnitt durch eine Verriegelungseinrichtung eines Schienenpaares gemäß eines dritten Ausführungsbeispiels in einem verriegelten Zustand,
- Fig. 11:: eine ausschnittsweise Ansicht einer oberen Sitzschiene des Längseinstellers gemäß des dritten Ausführungsbeispiels,
- Fig. 12:: eine perspektivische Darstellung einer Führungshülse gemäß des dritten Ausführungsbeispiels in einem Zustand vor der Montage, und
- Fig. 13:: eine perspektivische Darstellung der Führungshülse von Fig. 12 in einem Zustand nach der Montage.

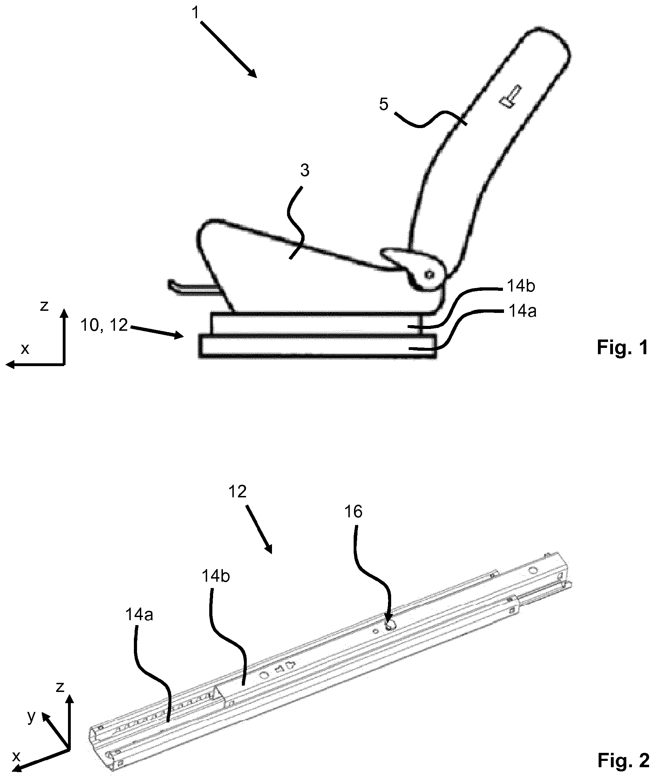

Ein in Figur 1 schematisch dargestellter Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Lehne 5 und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Der in Fig. 1 gezeigte Fahrzeugsitz 1 für ein Kraftfahrzeug weist ein Sitzteil 3 und eine relativ zum Sitzteil 3 in ihrer Neigung einstellbare Lehne 5 auf. Eine Neigung der Lehne 5 kann beispielsweise mittels eines Rastbeschlages oder eines Getriebebeschlages einstellbar sein. Der Fahrzeugsitz 1 ist zur Einstellung einer Sitzlängsposition auf einem Längseinsteller 10 montiert.

Fig. 2 zeigt eine schematische Darstellung eines Schienenpaares 12 des Längseinstellers 10. Das Schienenpaar 12 ist aus einer unteren Sitzschiene 14a, nachfolgend synonym auch als Unterschiene bezeichnet, und einer oberen Sitzschiene 14b, nachfolgend synonym auch als Oberschiene bezeichnet, gebildet. In einem zwischen der Unterschiene 14a und der Oberschiene 14b gebildeten Hohlraum ist eine Verriegelungseinrichtung 16 angeordnet.

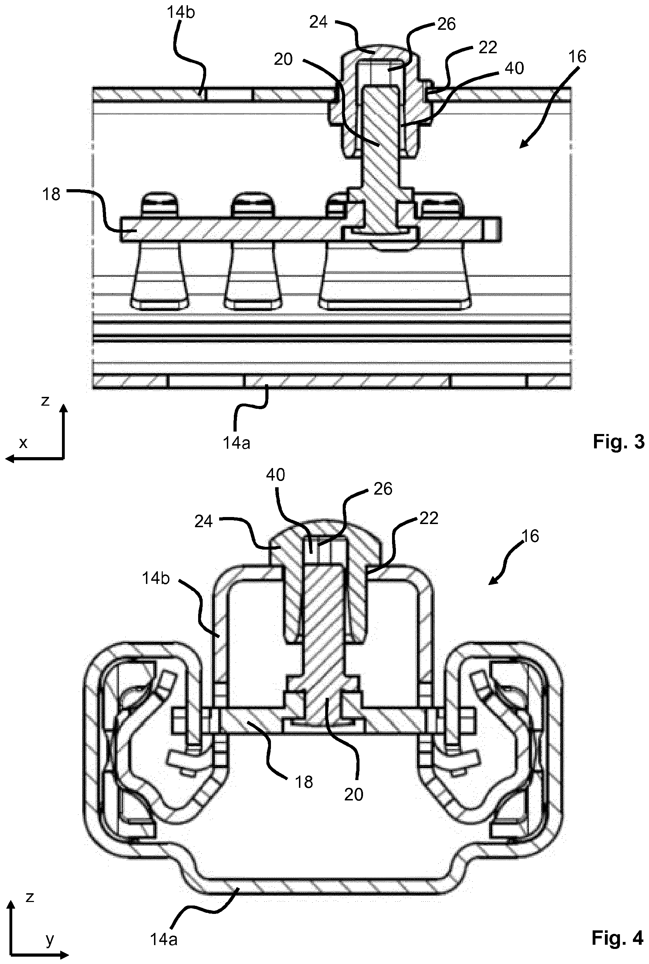

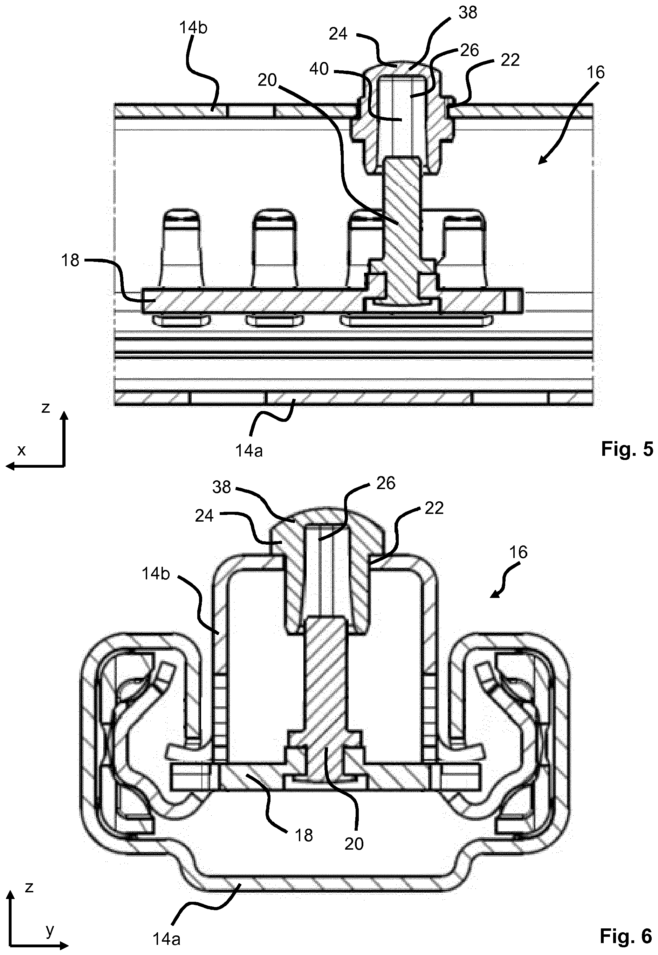

Die Figuren 3 und 5 zeigen einen ausschnittsweisen Längsschnitt durch die Verriegelungseinrichtung 16 des Schienenpaares 12 von Fig. 2, jeweils in einem verriegelten und einem entriegelten Zustand. Die Figuren 4 und 6 zeigen jeweils einen den Figuren 3 und 5 entsprechenden Querschnitt durch die Verriegelungseinrichtung 16 in entsprechenden Verriegelungszuständen. Die Figuren 3 bis 6 werden anschließend gemeinsam beschrieben.

Grundlegend sind ein Aufbau und eine Funktion von Vorrichtungen zum Betätigen der Verriegelungseinrichtung 16, insbesondere zum Bewegen der Rastplatte 18 in eine Entriegelungsstellung oder eine Verriegelungsstellung, bekannt. Insofern sei beispielhaft auf die DE 10 2010 049 542 A1 sowie die DE 10 2014 219 868 A1 verwiesen, deren diesbezüglicher Offenbarungsgehalt ausdrücklich mit einbezogen wird. Darüber hinaus kann in ebenfalls bekannter Weise ein nicht dargestelltes, die Rastplatte 18 in die Verriegelungsstellung treibendes Federelement zwischen der Rastplatte 18 und der Oberschiene 14b angeordnet sein, welches die Rastplatte 18 entgegen einer Entriegelungsrichtung mit einer Federkraft beaufschlagt.

Von der Rastplatte 18 in Vertikalrichtung z abstehend ist ein Führungsstift 20 angeordnet. Der Führungsstift 20 ist mit der Rastplatte 18 fest verbunden, bevorzugt vernietet. Der Führungsstift 20 weist mindestens eine derartige Länge auf, dass der Führungsstift 20 in einem unteren Bereich einer in der Oberschiene 14b gelagerten Führungshülse 24 gehalten ist, wenn die Rastplatte 18 sich in der Entriegelungsstellung befindet. Gleichfalls weist die Führungshülse 24, insbesondere eine im Wesentlichen abschnittsweise zylindrisch oder abschnittsweise konisch ausgestaltete Führungsöffnung 40 in der Führungshülse 24, mindestens eine derartige Tiefe auf, dass der Führungsstift 20 ungehindert in die Führungsöffnung 40 der Führungshülse 24 eintreten kann, wenigstens bis die Rastplatte 18 in die Verriegelungsstellung gebracht ist.

Die Führungshülse 24 liegt mit einem oberen Kopfabschnitt 38 von oben auf einer Oberfläche der Oberschiene 14b auf. Die Führungshülse 24, insbesondere die Führungsöffnung 40 der Führungshülse 24, ist nach oben geschlossen. Die Führungshülse 24 weist einen abgerundeten Kopfabschnitt 38 insbesondere einen Kopfabschnitt 38 mit einer umlaufenden abgerundeten Kante, auf. An einer Innenwandung der Führungsöffnung 40 der Führungshülse 14 sind ferner Führungsflächen 26 angeordnet, welche zur Führung des Führungsstiftes 20 dienen.

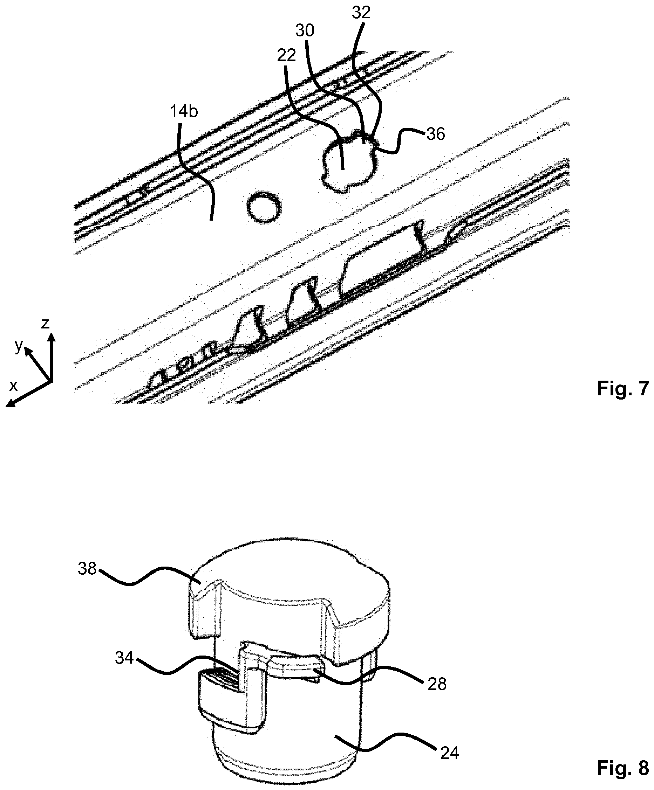

Fig. 7 zeigt eine ausschnittsweise Ansicht einer Oberschiene 14b des Längseinstellers 10. Die Oberschiene 14b weist eine Öffnung 22 auf. Die Öffnung 22 dient zur Aufnahme der Führungshülse 24.

Fig. 8 zeigt eine perspektivische Darstellung einer möglichen Ausgestaltung der Führungshülse 24, welche auf die Ausgestaltung der Öffnung 22 von Fig. 7 abgestimmt ist. Die Führungshülse 24 weist vorliegend eine Verdrehsicherung 28 in Form eines federelastisch abstehenden Clips auf, welcher bei einem Verdrehen der in die Öffnung 22 eingesetzten Führungshülse 24 in die Öffnung 22 eingreift und sich nach erfolgter Montage entgegen einer zur Montage vorgegebenen Drehrichtung an einem Randabschnitt der Öffnung 22, insbesondere an einem Randabschnitt einer Kontur 32 einer seitlichen Erweiterung 30 der Öffnung 22, abstützt. Die Führungshülse 24 weist vorliegend einen Anschlag 34 auf, welcher eine Drehbarkeit der in die Öffnung 22 eingesetzten Führungshülse 24 begrenzt, wenn der Anschlag 34 mit einer korrespondierenden Anschlagskante 36 der Öffnung 22 in Anlage gelangt.

Sofern einzelne Teile des nachfolgend beschriebenen zweiten Ausführungsbeispiels dieselben Bezugszeichen wie im zuvor beschriebenen ersten Ausführungsbeispiel aufweisen, sind diese mit den Teilen des ersten Ausführungsbeispiels identisch. Abweichend beschriebene Teile weisen ein um einhundert erhöhtes Bezugszeichen auf und können, sofern nicht explizit beschrieben, dennoch in Ausgestaltung und Funktion teilweise mit den Teilen des ersten Ausführungsbeispiels übereinstimmen.

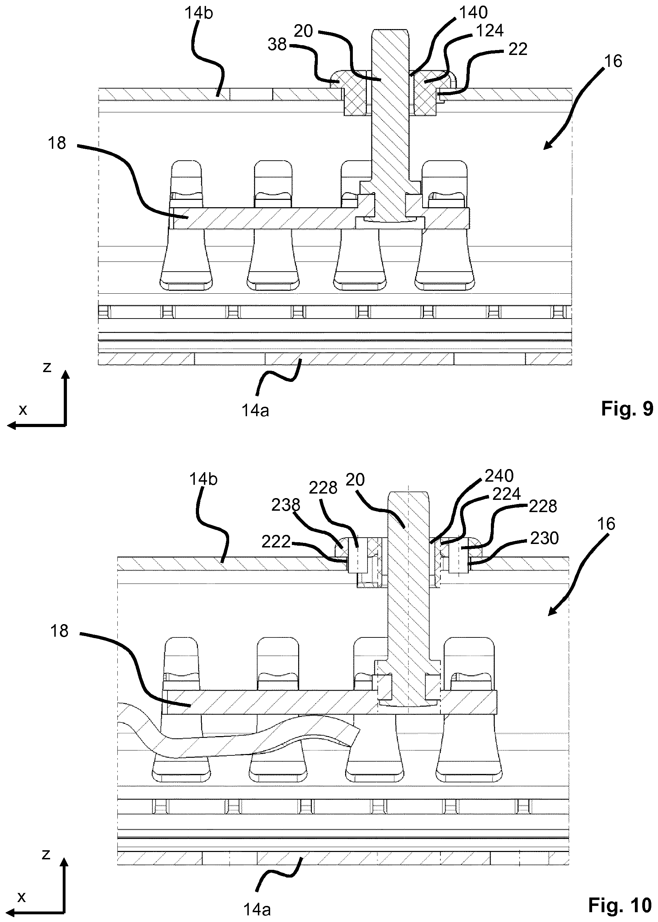

Die in Fig. 9 dargestellte Verriegelungseinrichtung 16 mit einer Führungshülse 124 gemäß eines zweiten Ausführungsbeispiels entspricht im Wesentlichen der Verriegelungseinrichtung 16 des ersten Ausführungsbeispiels. Der einzige Unterschied zur Verriegelungseinrichtung 16 des ersten Ausführungsbeispiels besteht darin, dass die Führungshülse 124 gemäß des zweiten Ausführungsbeispiels eine Führungsöffnung 140 in Form einer Durchgangsöffnung aufweist, welche es dem Führungsstift 20 ermöglicht im verriegelten Zustand nach oben aus der Führungsöffnung 140 heraus zu ragen. Die Führungshülse 124 ist in der Öffnung 22 der Oberschiene 14b mittels des Bajonettverschlusses gesichert.

Sofern einzelne Teile des nachfolgend beschriebenen dritten Ausführungsbeispiels dieselben Bezugszeichen wie im beschriebenen ersten Ausführungsbeispiel aufweisen, sind diese mit den Teilen des ersten Ausführungsbeispiels identisch. Abweichend beschriebene Teile weisen ein um zweihundert erhöhtes Bezugszeichen auf und können, sofern nicht explizit beschrieben, dennoch in Ausgestaltung und Funktion teilweise übereinstimmen.

Fig. 10 zeigt eine Verriegelungseinrichtung 16 eines Schienenpaares 12 mit einer Führungshülse 224 gemäß eines dritten Ausführungsbeispiels in einem verriegelten Zustand. Von der Rastplatte 18 steht in Vertikalrichtung z der Führungsstift 20 ab. Der Führungsstift 20 ist mit der Rastplatte 18 fest verbunden. Der Führungsstift 20 weist mindestens eine derartige Länge auf, dass der Führungsstift 20 in einer in der Oberschiene 14b gelagerten Führungshülse 224 gehalten ist, wenn die Rastplatte 18 sich in der Entriegelungsstellung befindet. Gleichfalls weist die Führungshülse 224 die im Wesentlichen abschnittsweise zylindrisch oder abschnittsweise konisch ausgestaltete Führungsöffnung 240 in Form einer Durchgangsöffnung auf, so dass der Führungsstift 20 ungehindert in der Führungsöffnung 240 der Führungshülse 224 geführt sein kann. Darüber hinaus ist gezeigt, dass die Führungshülse 224 mit einem oberen Kopfabschnitt 238 von oben auf einer Oberfläche der Oberschiene 14b aufliegt. Die Führungshülse 224 weist einen abgerundeten Kopfabschnitt 238, insbesondere einen Kopfabschnitt 238 mit einer umlaufenden abgerundeten Kante, auf.

Die Verdrehsicherung 228 ist in Form von Sicherungsstiften ausgebildet, welche in Vertikalrichtung z beweglich in dem Kopfabschnitt 238 der Führungshülse 224 angeordnet sind. In einem gesicherten Zustand der Führungshülse 224 in der Öffnung 222 der Oberschiene 14b ragen die Sicherungsstifte der Verdrehsicherung 228 aus dem Kopfabschnitt 238 der Führungshülse 224 nach unten heraus und bis in die Öffnung 222 hinein. Die Öffnung 222 weist zur Aufnahme der Führungshülse 224 eine angepasste Kontur 232 auf.

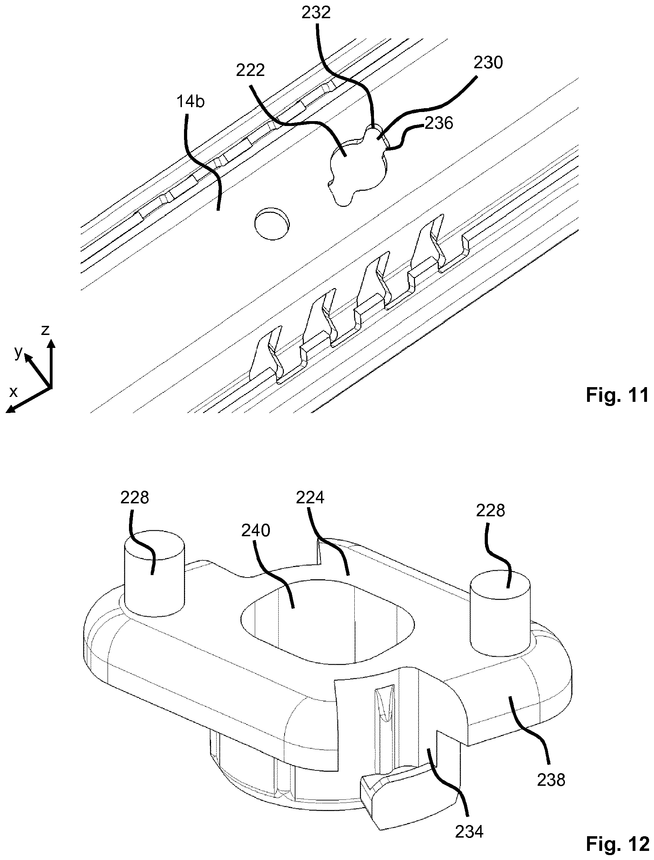

Die Kontur 232 der Öffnung 222 ist im Detail in Fig. 11 gezeigt. Die Öffnung 222 weist mindestens eine, vorliegend jedoch zwei seitliche Erweiterungen 230 auf, welche einen bereichsweise runden Öffnungsquerschnitt nach außen erweitern. Die beiden Erweiterungen weisen wiederum je eine Anschlagskante 236 auf.

In Fig. 12 ist eine perspektivische Darstellung der Führungshülse 224 gemäß des dritten Ausführungsbeispiels gezeigt. Hierbei ist zu sehen, dass die Sicherungsstifte der Verdrehsicherung 228 aus dem Kopfabschnitt 238 der Führungshülse 224 in nicht montiertem Zustand nach oben heraus stehen. Ferner weist die Führungshülse 224 einen Anschlag 234 auf, welche ein Drehbarkeit der in die Öffnung 222 eingesetzten Führungshülse 224 begrenzt, wenn der Anschlag 234 mit der Anschlagskante 236 in Anlage gelangt.

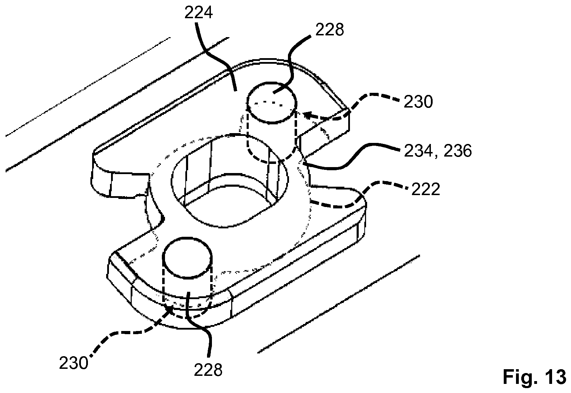

Fig. 13 zeigt die Führungshülse 224 gemäß des dritten Ausführungsbeispiels in einem Zustand nach der Montage in der Öffnung 222. Wenn die in die Öffnung 222 eingesetzte Führungshülse 224 soweit verdreht ist, dass der Anschlag 234 und die Anschlagskante 236 in Anlage sind, kann durch ein Verschieben der Sicherungsstifte der Verdrehsicherung 228, insbesondere durch ein Eindrücken der Sicherungsstifte in die Führungshülse 224, die Führungshülse 224 vor einem Verdrehen gesichert werden. Die Sicherungsstifte, welche in Vertikalrichtung z beweglich in der Führungshülse 224 angeordnet sind, sind vorliegend bis zu einem bündigen Abschluss der oberen Kante der Sicherungsstifte der Verdrehsicherung 228 mit der Führungshülse 224 in die Führungshülse 224 eingeschoben. Hierbei sind die Sicherungsstifte der Verdrehsicherung 228 mit ihrem unteren Ende in die Kontur 232 der Öffnung 222 eingetreten und sichern den Kontakt des Anschlags 234 zur Anschlagskante 236.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein, solange der resultierende Gegenstand dem Gegenstand entspricht, der durch die Ansprüche definiert ist.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen, solange der resultierende Gegenstand dem Gegenstand entspricht, der durch die Ansprüche definiert ist.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 3: Sitzteil
- 5: Lehne
- 10: Längseinsteller
- 12: Schienenpaar
- 14a: untere Sitzschiene; Unterschiene
- 14b: obere Sitzschiene; Oberschiene
- 16: Verriegelungseinrichtung
- 18: Rastplatte
- 20: Führungsstift
- 22,222: Öffnung
- 24, 124, 224: Führungshülse
- 26: Führungsflächen
- 28, 228: Verdrehsicherung
- 30, 230: Erweiterung
- 32, 232: Kontur
- 34, 234: Anschlag (der Führungshülse)
- 36, 236: Anschlagskante (der Kontur)
- 38, 238: Kopfabschnitt
- 40, 140, 240: Führungsöffnung

- x: Längsrichtung
- y: Querrichtung
- z: Vertikalrichtung

## Patentansprüche

1. Längseinsteller (10) für einen Fahrzeugsitz (1), aufweisend mindestens ein Schienenpaar (12), welches aus einer unteren Sitzschiene (14a) und einer oberen Sitzschiene (14b) gebildet ist, wobei die Sitzschienen (14a, 14b) des Sitzschienenpaares (12) einander wechselseitig umgreifen und in Längsrichtung (x) relativ zueinander beweglich sind und mittels einer Verriegelungseinrichtung (16) miteinander verriegelbar sind, wobei die Verriegelungseinrichtung (16) mindestens eine in Vertikalrichtung (z) bewegliche Rastplatte (18) aufweist, wobei die Rastplatte (18) eine in Vertikalrichtung (z) abstehenden Führungsstift (20) aufweist, wobei die obere Sitzschiene (14b) eine mit dem Führungsstift (20) fluchtende Öffnung (22; 222) aufweist, wobei in der Öffnung (22; 222) eine sich in den zwischen den Sitzschienen (14a, 14b) gebildeten Hohlraum erstreckende Führungshülse (24; 124; 224) aufgenommen ist und der Führungsstift (20) mittels der Führungshülse (24; 124; 224) geführt ist,
**dadurch gekennzeichnet,**
**dass** die obere Sitzschiene (14b) und die Führungshülse (24; 124; 224) mittels eines Bajonettverschlusses verbindbar sind.

2. Längseinsteller (10) nach Anspruch 1, wobei die Führungshülse (24; 124; 224) in Vertikalrichtung (z) nach oben geschlossen ausgestaltet ist.

3. Längseinsteller (10) nach einem der Ansprüche 1 oder 2, wobei die Führungshülse (24; 124; 224) mittels eines Kopfabschnitts (38; 238) im Bereich der Öffnung (22; 222) von oben auf einer Oberfläche der oberen Sitzschiene (14b) aufliegt.

4. Längseinsteller (10) nach einem der Ansprüche 1 bis 3, wobei die Führungshülse (24; 124; 224) eine nach oben abgerundete Außenfläche aufweist.

5. Längseinsteller (10) nach einem der Ansprüche 1 bis 4, wobei die Führungshülse (24; 124; 224) in einem unteren Bereich eine konische Öffnung aufweist.

6. Längseinsteller (10) nach einem der Ansprüche 1 bis 5, wobei die Führungshülse (24; 124; 224) eine Verdrehsicherung (28; 228) aufweist, welche die montierte Führungshülse (24; 124; 224) in der Öffnung (22; 222) fixiert.

7. Längseinsteller (10) nach Anspruch 6, wobei die Verdrehsicherung (28) in Form eines federelastisch abstehenden Clips ausgebildet ist.

8. Längseinsteller (10) nach Anspruch 6, wobei die Verdrehsicherung (228) in Form von Sicherungsstiften ausgebildet ist, welche in Vertikalrichtung (z) in die Führungshülse (224) eingedrückt sind und in einem montierten Zustand in die Öffnung (222), insbesondere in die Erweiterungen (230), eingreifen.

9. Längseinsteller (10) nach einem der Ansprüche 1 bis 8, wobei die Führungshülse (24; 124; 224) einen Anschlag (34, 234) aufweist.

10. Längseinsteller (10) nach einem der Ansprüche 1 bis 9, wobei eine Kontur (32; 232) der Öffnung (22; 222) eine Anschlagskante (36; 236) aufweist.

11. Längseinsteller (10) nach Anspruch 10, wobei die Anschlagskante (36; 236) in einer seitlichen Erweiterung (30; 230) der Öffnung (22; 222) angeordnet ist, insbesondere einer Erweiterung (30; 230), welche einen bereichsweise runden Öffnungsquerschnitt nach außen erweitert.

12. Längseinsteller (10) nach einem der Ansprüche 1 bis 11, wobei ein Innendurchmesser der Führungshülse (24; 124; 224) geringfügig größer ist, als ein Außendurchmesser des Führungsstiftes (20).

13. Längseinsteller (10) nach einem der Ansprüche 1 bis 12, wobei die Führungshülse (24; 124; 224) auf ihrer Innenseite wenigstens drei Führungsflächen (26) aufweist.

14. Längseinsteller (10) nach einem der Ansprüche 1 bis 13, wobei die Führungshülse (24; 124; 224) aus einem Kunststoffmaterial gefertigt ist.

15. Fahrzeugsitz (1) mit einem Längseinsteller (10) nach einem der vorhergehenden Ansprüche.

## Claims

1. Longitudinal adjuster (10) for a vehicle seat (1) having at least one pair of rails (12) which is formed from a lower seat rail (14a) and an upper seat rail (14b), wherein the seat rails (14a, 14b) of the pair of seat rails (12) mutually engage around each other and are movable relative to each other in the longitudinal direction (x) and are lockable to each other by means of a locking device (16), wherein the locking device (16) has at least one latching plate (18) which is movable in the vertical direction (z), wherein the latching plate (18) has a guide pin (20) protruding in the vertical direction (z), wherein the upper seat rail (14b) has an opening (22; 222) aligned with the guide pin (20), wherein a guide sleeve (24; 124; 224) extending into the cavity formed between the seat rails (14a, 14b) is accommodated in the opening (22; 222) and the guide pin (20) is guided by means of the guide sleeve (24; 124; 224),
**characterized in that**
the upper seat rail (14b) and the guide sleeve (24; 124; 224) are connectable by means of a bayonet catch.

2. Longitudinal adjuster (10) according to Claim 1, wherein the guide sleeve (24; 124; 224) is designed to be closed upwardly in the vertical direction (z).

3. Longitudinal adjuster (10) according to either of Claims 1 and 2, wherein the guide sleeve (24; 124; 224) bears from above by means of a top portion (38; 238) in the region of the opening (22; 222) against a surface of the upper seat rail (14b).

4. Longitudinal adjuster (10) according to one of Claims 1 to 3, wherein the guide sleeve (24; 124; 224) has an upwardly rounded outer surface.

5. Longitudinal adjuster (10) according to one of Claims 1 to 4, wherein the guide sleeve (24; 124; 224) has a conical opening in a lower region.

6. Longitudinal adjuster (10) according to one of Claims 1 to 5, wherein the guide sleeve (24; 124; 224) has an anti-twist protection device (28; 228) which fixes the mounted guide sleeve (24; 124; 224) in the opening (22; 222).

7. Longitudinal adjuster (10) according to Claim 6, wherein the anti-twist protection device (28) is configured in the form of a clip protruding in a spring-elastic manner.

8. Longitudinal adjuster (10) according to Claim 6, wherein the anti-twist protection device (228) is configured in the form of securing pins, which are pushed in the vertical direction (z) into the guide sleeve (224) and in a mounted state engage in the opening (222), in particular in the widenings (230).

9. Longitudinal adjuster (10) according to one of Claims 1 to 8, wherein the guide sleeve (24; 124; 224) has a stop (34; 234).

10. Longitudinal adjuster (10) according to one of Claims 1 to 9, wherein a contour (32; 232) of the opening (22; 222) has a stop edge (36; 236).

11. Longitudinal adjuster (10) according to Claim 10, wherein the stop edge (36; 236) is arranged in a lateral widening (30; 230) of the opening (22; 222), in particular a widening (30; 230) which outwardly widens a partially round opening cross-section.

12. Longitudinal adjuster (10) according to one of Claims 1 to 11, wherein an internal diameter of the guide sleeve (24; 124; 224) is slightly larger than an external diameter of the guide pin (20).

13. Longitudinal adjuster (10) according to one of Claims 1 to 12, wherein the guide sleeve (24; 124; 224) has at least three guide surfaces (26) on its inner face.

14. Longitudinal adjuster (10) according to one of Claims 1 to 13, wherein the guide sleeve (24; 124; 224) is produced from a plastics material.

15. Vehicle seat (1) having a longitudinal adjuster (10) according to one of the preceding claims.

## Revendications

1. Dispositif de réglage en longueur (10) pour un siège de véhicule (1), comprenant au moins une paire de rails (12), qui est formée d'un rail de siège inférieur (14a) et d'un rail de siège supérieur (14b), les rails de siège (14a, 14b) de la paire de rails de siège (12) s'enserrant mutuellement et étant mobiles l'un par rapport à l'autre dans la direction longitudinale (x) et pouvant être verrouillés entre eux au moyen d'un dispositif de verrouillage (16), le dispositif de verrouillage (16) comprenant au moins une plaque d'encliquetage (18) mobile dans la direction verticale (z), la plaque d'encliquetage (18) comprenant une tige de guidage (20) faisant saillie dans la direction verticale (z), le rail de siège supérieur (14b) comprenant une ouverture (22 ; 222) en alignement avec la tige de guidage (20), un manchon de guidage (24 ; 124 ; 224) qui s'étend dans la cavité formée entre les rails de siège (14a, 14b) étant logé dans l'ouverture (22 ; 222) et la tige de guidage (20) étant guidée au moyen du manchon de guidage (24 ; 124 ; 224),
**caractérisé en ce que**
le rail de siège supérieur (14b) et le manchon de guidage (24 ; 124 ; 224) peuvent être reliés au moyen d'une fermeture à baïonnette.

2. Dispositif de réglage en longueur (10) selon la revendication 1, dans lequel le manchon de guidage (24 ; 124 ; 224) est conçu sous forme fermée vers le haut dans la direction verticale (z).

3. Dispositif de réglage en longueur (10) selon l'une quelconque des revendications 1 ou 2, dans lequel le manchon de guidage (24 ; 124 ; 224) repose par l'intermédiaire d'une section de tête (38 ; 238) dans la zone de l'ouverture (22 ; 222) par le haut sur une surface du rail de siège supérieur (14b).

4. Dispositif de réglage en longueur (10) selon l'une quelconque des revendications 1 à 3, dans lequel le manchon de guidage (24 ; 124 ; 224) comprend une surface extérieure arrondie vers le haut.

5. Dispositif de réglage en longueur (10) selon l'une quelconque des revendications 1 à 4, dans lequel le manchon de guidage (24 ; 124 ; 224) comprend une ouverture conique dans une zone inférieure.

6. Dispositif de réglage en longueur (10) selon l'une quelconque des revendications 1 à 5, dans lequel le manchon de guidage (24 ; 124 ; 224) comprend un dispositif anti-rotation (28 ; 228), qui fixe le manchon de guidage monté (24 ; 124 ; 224) dans l'ouverture (22 ; 222).

7. Dispositif de réglage en longueur (10) selon la revendication 6, dans lequel le dispositif anti-rotation (28) est configuré sous la forme d'une attache faisant saillie élastiquement.

8. Dispositif de réglage en longueur (10) selon la revendication 6, dans lequel le dispositif anti-rotation (228) est configuré sous la forme de tiges anti-rotation, qui sont enfoncées dans la direction verticale (z) dans le manchon de guidage (224) et entrent en prise à un état monté dans l'ouverture (222), notamment dans les élargissements (230).

9. Dispositif de réglage en longueur (10) selon l'une quelconque des revendications 1 à 8, dans lequel le manchon de guidage (24 ; 124 ; 224) comprend une butée (34, 234) .

10. Dispositif de réglage en longueur (10) selon l'une quelconque des revendications 1 à 9, dans lequel un contour (32, 232) de l'ouverture (22 ; 222) comprend un bord de butée (36 ; 236).

11. Dispositif de réglage en longueur (10) selon la revendication 10, dans lequel le bord de butée (36 ; 236) est agencé dans un élargissement latéral (30 ; 230) de l'ouverture (22 ; 222), notamment un élargissement (30 ; 230), qui élargit vers l'extérieur une section transversale d'ouverture ronde dans certaines zones.

12. Dispositif de réglage en longueur (10) selon l'une quelconque des revendications 1 à 11, dans lequel un diamètre intérieur du manchon de guidage (24 ; 124 ; 224) est légèrement plus grand qu'un diamètre extérieur de la tige de guidage (20).

13. Dispositif de réglage en longueur (10) selon l'une quelconque des revendications 1 à 12, dans lequel le manchon de guidage (24 ; 124 ; 224) comprend sur son côté intérieur au moins trois surfaces de guidage (26).

14. Dispositif de réglage en longueur (10) selon l'une quelconque des revendications 1 à 13, dans lequel le manchon de guidage (24 ; 124 ; 224) est fabriqué en une matière plastique.

15. Siège de véhicule (1) muni d'un dispositif de réglage en longueur (10) selon l'une quelconque des revendications précédentes.
